# EUROPÄISCHE PATENTANMELDUNG

(11) **EP 3 050 471 A1**
(43) Veröffentlichungstag der Anmeldung: **03.08.2016**
(21) Anmeldenummer: 15405008.2
(22) Anmeldetag: 30.01.2015
(51) Int. Cl.: A47J 31/44

(54) **Heissgetränkeautomat mit Sensor**

(71) Anmelder: JURA ELEKTROAPPARATE AG, 4626 Niederbuchsiten (CH)
(72) Erfinder: Reyhanloo, Shahryar, 6405 Immensee (CH)
(74) Vertreter: EGLI-EUROPEAN PATENT ATTORNEYS

(57) **Zusammenfassung**

Die Erfindung betrifft einen Heissgetränkeautomaten (1), vorzugsweise einen Kaffeevollautomaten, der einen ersten Heissgetränkeauslass (4), vorzugsweise Kaffeeauslass, sowie einen zweiten Heissgetränkeauslass (5), vorzugsweise Cappuccinoauslass, aufweist. Der Heissgetränkeautomat (1) weist eine Trinkgefässablage (8) auf, auf der Trinkgefässe (10), insbesondere Tassen oder Gläser, unterhalb der Heissgetränkeauslässe (4, 5) abstellbar sind derart, dass aus dem ersten und/oder zweiten Heissgetränkeauslass (4, 5) ein Heissgetränk in das Trinkgefäss (10) ausgebbar ist. Der Heissgetränkeautomat (1) weist ferner eine Sensoreinheit mit mindestens einem Sensor (2, 3) auf. Der Sensor (2, 3) ist ausgebildet, zu detektieren, ob mindestens ein Trinkgefäss (10) unterhalb zumindest einer der Heissgetränkeauslässe (4, 5) auf der Trinkgefässablage (8) abgestellt ist und/oder von welcher Art ein Trinkgefäss (10) ist, welches unterhalb zumindest einer der Heissgetränkeauslässe (4, 5) auf der Trinkgefässablage (8) abgestellt ist.

## Beschreibung

Die vorliegende Erfindung betrifft einen Heissgetränkeautomaten, vorzugsweise einen Kaffeevollautomaten, der einen ersten Heissgetränkeauslass, vorzugsweise einen Kaffeeauslass sowie einen zweiten Heissgetränkeauslass, vorzugsweise einen Cappuccinoauslass aufweist. Der Heissgetränkeautomat weist ferner eine Trinkgefässablage auf, auf der Trinkgefässe, insbesondere Tassen oder Gläser, unterhalb der Heissgetränkeauslässe abstellbar sind derart, dass aus dem ersten und/oder zweiten Heissgetränkeauslass ein Heissgetränk in das Trinkgefäss ausgebbar ist.

Heissgetränkeautomaten und insbesondere Kaffeevollautomaten werden seit den 1980er Jahren immer beliebter, da sie die schnelle Zubereitung von Kaffeegetränken, Kakao, Teegetränken, etc. ermöglichen, ohne dass hierzu ein Nutzer aufwendige Bedienschritte durchführen müsste. Auch ist es möglich, Espresso, Cappuccino, Latte Macchiato, etc. herzustellen, unter anderem dadurch, dass moderne Kaffeevollautomaten oft über eine Einrichtung zum Milchaufschäumen verfügen.

Kaffeevollautomaten weisen zumeist zumindest einen Kaffeeauslass auf, aus dem Kaffee in ein Trinkgefäss ausgegeben werden kann. Darüber hinaus sind weitere Heissgetränkeauslässe, wie z. B. ein Cappuccinoauslass, über den Kaffee sowie (aufgeschäumte) Milch in ein Trinkgefäss ausgebbar sind, ein Milchschaumauslass, ein Heisswasserauslass, ein Kombiauslass, etc., denkbar und bei vielen Heissgetränkeautomaten realisiert. Unterhalb all dieser Heissgetränkeauslässe kann mindestens ein Trinkgefäss angeordnet werden, sodass das entsprechende Heissgeträrik (Kaffee, Milch, heisses Wasser, etc.) aus dem Heissgetränkeauslass in das Trinkgefässe ausgebbar ist.

Bei den Trinkgefässen handelt es sich üblicherweise um Tassen aus Keramik oder Glas; allerdings sind auch andere Trinkgefässe wie z. B. Gläser denkbar. Die Trinkgefässauslässe können höhenverstellbar sein, um es zu ermöglichen, verschiedene Heissgetränke in verschiedene Trinkgefässe auszugeben.

Bekannte Heissgetränkeautomaten weisen somit mindestens zwei, oftmals mehr, Heissgetränkeauslässe auf, die jeweils geeignet sind, Heissgetränke verschiedener Art in darunter platzierte Trinkgefässe auszugeben. Bei bekannten Heissgetränkeautomaten ist unterhalb der Heissgetränkeauslässe eine Trinkgefässablage vorgesehen, auf der Trinkgefässe platziert werden können. Die Heissgetränkeauslässe befinden sich oberhalb der Trinkgefässablage, sodass ein Nutzer ein Trinkgefäss unterhalb einer der Trinkgefässauslässe platzieren kann und dann über ein Wahlrad, Display oder dergleichen die Art des Heissgetränks auswählt, welches in das Trinkgefäss ausgegeben werden soll.

Ein Nutzer muss somit wissen, unter welchem Heissgetränkeauslass er das Trinkgefäss platzieren muss, um zu verhindern, dass ein Heissgetränk an einem Heissgetränkeauslass ausgegeben wird, unter dem sich gar kein Trinkgefäss befindet. Ausserdem muss ein Nutzer ein Heissgetränk aus einer Vielzahl von möglichen Heissgetränken auswählen, von denen gegebenenfalls nur eine relativ geringe Anzahl von dem Heissgetränkeauslass ausgebbar sind, unterhalb dessen der Nutzer ein Trinkgefäss platziert hat.

Insgesamt weisen bekannte Heissgetränkeautomaten somit den Nachteil auf, dass eine Vielzahl von Heissgetränken aus mindestens zwei Heissgetränkeauslässen ausgebbar sind und ein Nutzer sowohl wissen muss, unterhalb von welchem Heissgetränkeauslass er ein Trinkgefäss platzieren muss, um ein gewünschtes Heissgetränk zu bekommen, als auch aus der Vielzahl von Heissgetränken genau jenes auswählen muss, welches in das Trinkgefäss ausgegeben werden soll.

Der vorliegenden Erfindung liegt somit die Aufgabe zugrunde, einen Heissgetränkeautomat der eingangs genannten Art dahingehend weiterzubilden, dass ein Heissgetränkeautomat einfacher zu bedienen und nutzerfreundlicher ist.

Des Weiteren soll ein entsprechendes Verfahren zum Betreiben eines solchen Heissgetränkeautomaten angegeben werden.

Im Hinblick auf den Heissgetränkeautomat wird die der Erfindung zugrunde liegende Aufgabe erfindungsgemäss durch den Gegenstand des unabhängigen Patentanspruchs 1 gelöst. Im Hinblick auf das Verfahren zum Betreiben des Heissgetränkeautomaten wird die der Erfindung zugrunde liegende Aufgabe durch den Gegenstand des nebengeordneten Patentanspruchs 11 gelöst. Vorteilhafte Weiterbildungen des erfindungsgemässen Heissgetränkeautomaten sowie des erfindungsgemässen Verfahrens sind in den abhängigen Patentansprüchen angegeben.

Demnach wird insbesondere ein Heissgetränkeautomat, vorzugsweise ein Kaffeevollautomat, vorgeschlagen, der einen ersten Heissgetränkeauslass, vorzugsweise einen Kaffeeauslass, sowie einen zweiten Heissgetränkeauslass, vorzugsweise einen Cappuccinoauslass, aufweist.'Der Heissgetränkeautomat weist ferner eine Trinkgefässablage auf, auf der Trinkgefässe, insbesondere Tassen oder Gläser, unterhalb der Heissgetränkeauslässe abstellbar sind derart, dass aus dem ersten und/oder zweiten Heissgetränkeauslass ein Heissgetränk in das Trinkgefäss ausgebbar ist. Ferner weist der Heissgetränkeautomat eine Sensoreinheit mit mindestens einem Sensor auf, wobei der Sensor ausgebildet ist, zu detektieren, ob mindestens ein Trinkgefäss unterhalb zumindest einer der Heissgetränkeauslässe auf der Trinkgefässablage abgestellt ist. Alternativ oder zusätzlich hierzu ist der mindestens eine Sensor ausgebildet, die Art des mindestens einen Trinkgefässes zu erfassen, welches unterhalb zumindest einer der Heissgetränkeauslässe auf der Trinkgefässablage abgestellt ist.

Die mit der Erfindung erzielbaren Vorteile liegen auf der Hand. Während bei herkömmlichen Heissgetränkeautomaten der Nutzer des Heissgetränkeautomats genau wissen muss, unter welchen Heissgetränkeauslass er ein Trinkgefäss platziert, da das von dem Nutzer gewählte Heissgetränk von einem bestimmten der Heissgetränkeauslässe ausgegeben wird, ist erfindungsgemäss vorgesehen, dass der Heissgetränkeautomat über eine Sensoreinheit mit mindestens einem Sensor verfügt, der detektiert, unterhalb welchen Heissgetränkeauslasses ein Trinkgefäss abgestellt wurde.

Somit kann verhindert werden, dass ein Heissgetränk an einem Heissgetränkeauslass ausgegeben wird, unterhalb dessen gar kein Trinkgefäss abgestellt wurde. Die Nutzung eines Heissgetränkeautomats für einen Nutzer ist somit erheblich vereinfacht, da der Nutzer ein Trinkgefäss auf der Trinkgefässablage abstellen kann, ohne sich Gedanken darüber zu machen, ob ein Heissgetränk gegebenenfalls von einem Heissgetränkeauslass ausgegeben wird, unter dem gar kein Trinkgefäss positioniert bzw. abgestellt wurde. Vielmehr kann sich ein Nutzer sicher sein, dass nur von dem Heissgetränkeauslass ein Heissgetränk ausgegeben wird, unterhalb dessen er ein Trinkgefäss abgestellt hat.

Gemäss einem Aspekt der Erfindung ist vorgesehen, dass der Heissgetränkeautomat ferner eine Steuereinheit sowie eine Anzeigeeinrichtung aufweist, wobei der mindestens eine Sensor mit der Steuereinheit signaltechnisch verbunden ist und wobei die Steuereinheit ausgebildet ist, die Anzeigeeinrichtung anzusteuern derart, dass die Anzeigeeinrichtung die Heissgetränke anzeigt, die von dem Heissgetränkeauslass ausgebbar sind, unterhalb dessen das Trinkgefäss abgestellt ist. Dies ist insbesondere vorgesehen, wenn ein Trinkgefäss unterhalb eines Heissgetränkeauslasses abgestellt ist und dies vom Sensor detektiert ist.

Vorteilhafterweise wird hierdurch erreicht, dass ein Nutzer nicht unter einer Vielzahl von Heissgetränken das Heissgetränk auswählen muss, dass aus dem Heissgetränkeauslass ausgebbar ist, unterhalb dessen das Trinkgefäss abgestellt ist, obschon nur ein Teil der Heissgetränke, die vom Heissgetränkeautomat ausgebbar sind, von eben diesem Heissgetränkeauslass ausgebbar sind, unterhalb dessen das Trinkgefäss abgestellt ist. Vielmehr zeigt der Heissgetränkeautomat bzw. die Anzeigeeinrichtung des Heissgetränkeautomats dem Nutzer nur genau jene Heissgetränke an, die von dem Heissgetränkeauslass ausgebbar sind, unterhalb dessen sich das Trinkgefäss befindet.

Vorstellbar ist beispielsweise, dass ein Trinkgefäss vom Nutzer unterhalb eines Kaffeeauslasses platziert bzw. abgestellt wird (auf der Trinkgefässablage). Von diesem Heissgetränkeauslass ist somit lediglich Kaffee oder eine direkte Kaffeevariante wie Espresso in das Trinkgefässe aüsgebbar. Nicht in das Trinkgefäss ausgebbar ist in diesem Fall z. B. aufgeschäumte Milch oder heisses Wasser. Eine Anzeigeeinrichtung, beispielsweise ein Display wie ein berührungsempfindliches Touchdisplay, würde in diesem Fall erfindungsgemäss dem Nutzer lediglich die Heissgetränke, d. h. in diesem Fall die Kaffeevariationen, anbieten, die von dem Kaffeeauslass tatsächlich ausgebbar sind. Konkret könnte in diesem Fäll der Nutzer also aus einer Reihe von Kaffeevarianten wählen, nicht aber aufgeschäumte Milch, Cappuccino, heisses Wasser oder dergleichen wählen, da diese Heissgetränke nicht von dem Heissgetränkeauslass ausgebbar sind, unterhalb dessen der Nutzer ein Trinkgefäss abgestellt hat.

Entsprechendes gilt natürlich für den Fall, dass ein Nutzer ein Trinkgefäss unterhalb z. B. eines Heisswasserauslasses abstellt. In diesem Fall würde die Anzeigeeinrichtung dem Nutzer keine Kaffeevariationen zur Auswahl anbieten. Auch Kombiauslässe sind denkbar, die z. B. die Ausgabe von Kaffee und Milch, nicht aber von heissem Wasser ermöglichen. Auch sind andere Heissgetränke und andere entsprechende Heissgetränkeauslässe z. B. für Kakao o. ä. denkbar.

Die Steuereinheit kann als Prozessor ausgebildet sein, der vorzugsweise in den Heissgetränkeautomat integriert ist. Natürlich ist auch denkbar, dass die vom Sensor detektierte Information auf eine Steuereinheit übertragen wird, die nicht in dem Heissgetränkeautomat integriert ist. Denkbar hierbei ist z. B. eine WLAN Verbindung zu einem weiter entfernten Computer.

Der Begriff "signaltechnisch" verbunden, bedeutet, dass die vom Sensor generierte Information bzgl. des mindestens einen Trinkgefässes zu der Steuereinheit übertragbar ist. Hierbei ist eine herkömmliche Kabelverbindung denkbar oder aber eine Funkverbindung wie z. B. eine WLAN Verbindung. Die Steuereinheit ist elektrisch mit der Anzeigeeinrichtung verbunden, sodass die Steuereinheit, nachdem sie Information vom Sensor empfangen hat und diese Information verarbeitet hat, ein entsprechendes Signal an die Anzeigeeinrichtung übermitteln kann, sodass die Anzeigeeinrichtung hierauf, wie oben beschrieben, genau die Heissgetränke anzeigt, die von dem Heissgetränkeauslass ausgebbar sind, unterhalb dessen der Nutzer ein Trinkgefäss abgestellt hat.

Vorzugsweise dient die Anzeigeeinrichtung gleichzeitig als Eingabeeinrichtung, sodass dem Nutzer die von Heissgetränke angezeigt werden, die von dem Heissgetränkeauslass ausgebbar sind, unterhalb dessen er ein Trinkgefäss abgestellt hat, und die Anzeigeeinrichtung gleichzeitig die Auswahl eines der Heissgetränke durch den Nutzer ermöglicht. Hierzu kommt vorzugsweise ein berührungsempfindliches Display zum Einsatz. Andererseits kann die Auswahl eines Heissgetränks über eine andere Einrichtung als die Anzeigeeinrichtung erfolgen, z. B. über ein Wahlrad.

Dadurch, dass von dem Sensor ermittelt wird, unterhalb welchen Heissgetränkeauslasses der Nutzer ein Trinkgefäss platziert hat, wird somit zum einen vermieden, dass ein Heissgetränk von einem Heissgetränkeauslass ausgegeben wird, unterhalb dessen kein Trinkgefäss abgestellt ist, da dies von der Steuereinheit unterbunden wird, und zum anderen die Anzeige von Heissgetränken für den Nutzer vereinfacht, da dem Nutzer nur die Heissgetränke von der Anzeigeeinrichtung angezeigt werden, die von dem Heissgetränkeauslass ausgebbar sind, unterhalb dessen vom Nutzer das Trinkgefäss auf die Trinkgefässablage abgestellt wurde.

Gemäss einem weiteren Aspekt der Erfindung ist vorgesehen, dass der mindestens eine Sensor als Ultraschall-, Laserentfernungsmess-, PMD-, LIDAR-, induktiver oder kapazitativer Sensor ausgebildet ist.

Der Sensor ist insbesondere als Abstandsmesssensor ausgebildet, was ermöglicht, dass vom Sensor detektiert wird, ob ein Trinkgefäss unterhalb eines Heissgetränkeauslasses platziert wurde. Hierzu ist beispielsweise vorgesehen, dass der Sensor einen elektromagnetischen Puls, vorzugsweise in Gestalt eines Lichtpulses, eines Infrarotpulses oder eines Laserpulses aussendet in Richtung eines Ortes auf der Oberfläche der Trinkgefässablage, auf dem ein Trinkgefäss platziert wird, wenn es unterhalb einer der Trinkgefässauslässe platziert wird. Der elektromagnetische Puls wird von diesem Ort zur Quelle reflektiert und durch das Messen der Laufzeit kann auf die Distanz zwischen dem Sensor und der Position geschlossen werden. Wenn nun ein Trinkgefäss an diesem Ort platziert wird, verkürzt sich die Entfernung zwischen dem Sensor und der Position, da der elektromagnetische Puls die Position nicht mehr erreicht sondern vorher von dem Trinkgefäss reflektiert wird. Somit kann der Sensor durch die oben beschriebene Laufzeitmessung erkennen, dass ein Objekt auf dieser Position platziert wurde und/oder von welcher Art ein Objekt ist, das auf dieser Position platziert wurde.

Denkbar hierbei ist es insbesondere, dass die Sensoreinrichtung wenigstens einen Sensor aufweist, mit welchem die Grösse, die Formgebung und/oder das Material des Trinkgefässes erfasst werden kann. Bei einer möglichen Realisierung einer derartigen Sensoreinrichtung weist diese beispielsweise wenigstens einen vorzugsweise optisch, induktiv oder kapazitiv arbeitenden Sensor auf, so dass zur Identifizierung des Trinkgefässes die Grösse, die Formgebung und/oder das Material des Trinkgefässes erfasst werden kann. Als Sensor kommen aber auch andere Detektortypen in Frage, wie beispielsweise induktiv arbeitende Sensoren, Lichttaster, Lichtvorhänge, Laserscanner, 3D-Laser, Kameras etc.

Auch ist denkbar, dass jedes Trinkgefäss und/oder Reinigungsgefäss ein mit dem Sensor erfassbares Identifizierungsmerkmal, wie etwa einen Identifizierungscode und/oder einen RFID-Chip, aufweist. Das von dem Sensor erfasste Identifizierungsmerkmal liefert dann den Hinweis auf die Art des Trinkgefässes.

Hierbei ist vorzugsweise vorgesehen, dass die Steuereinheit die detektierten Trinkgefässe Trinkgefässgruppen zuordnet, wobei die Trinkgefässe verschiedener Trinkgefässgruppen jeweils geeignet und/oder vorgesehen sind für verschiedene Arten von Heissgetränken. So könnte eine Gruppe beispielsweise aus Trinkgefässen bestehen, die geeignet und/oder vorgesehen sind für Latte Macchiato oder Cappuccino. Eine andere Gruppe könnte beispielsweise aus Trinkgefässen bestehen, die geeignet und/oder vorgesehen sind für Espresso. Hierdurch werden dem Nutzer nutzerfreundlich nur die Heissgetränke angezeigt, die geeignet sind für das Trinkgefäss, das der Nutzer auf der Trinkgefässablage abgestellt hat.

Natürlich sind andere Abstandsmessverfahren, z. B. über die Phasenverschiebung des elektromagnetischen Pulses oder dessen Modulation gegenüber dem ausgesandten Strahl oder auch Methoden wie die Lasertriangulation denkbar.

Der Sensor ist somit ausgelegt, die Distanz zwischen Sensor und Trinkgefäss unterhalb eines Heissgetränkeauslasses zu messen und so zu detektieren, ob ein Trinkgefäss unterhalb einer der Heissgetränkeauslässe platziert wurde sowie vorzugsweise die Art des Trinkgefässes zu detektieren. Hierdurch kann die dem Nutzer angezeigte Auswahl von Heissgetränke so angepasst werden, dass nur die für das Trinkgefäss geeignete Auswahl von Heissgetränken angezeigt wird. Beispielsweise ist denkbar, dass eine kleine Espressotasse unterhalb eines Cappuccinoauslasses platziert wird. Dem Nutzer wird dann nur ein Heissgetränk angezeigt, das in die kleine Espressotasse passt.

Gemäss einem weiteren Aspekt der Erfindung ist vorgesehen, dass der mindestens eine Sensor ausgebildet ist, zu detektieren, ob das Trinkgefäss als Reinigungsgefäss ausgebildet ist.

Vorteilhafter Weise kann der Sensor detektieren, ob das Trinkgefäss als ein Reinigungsgefäss ausgebildet ist, beispielsweise da das Reinigungsgefäss aus Metall ist oder einen Identifizierungscode aufweist. Dem Nutzer wird vorzugsweise auf der Anzeigeeinrichtung angezeigt, dass ein Reinigungsgefäss unterhalb einer der Heissgetränkeauslässe platziert wurde. Somit wird vermieden, dass ein Nutzer verschiedene Heissgetränke auf der Anzeigeeinrichtung angezeigt bekommt, obwohl er einen Reinigungsbetrieb des Heissgetränkeautomaten anstrebt.

Gemäss einem weiteren Aspekt der Erfindung ist vorgesehen, dass die Steuereinheit ausgebildet ist, einen Reinigungsbetriebsmodus des Heissgetränkeautomaten zu starten, wenn von dem mindestens einen Sensor detektiert wird, dass ein Reinigungsgefäss auf der Trinkgefässablage unterhalb einer der Heissgetränkeauslässe abgestellt ist.

Vorteilhafterweise wird somit ein Reinigungsbetriebsmodus des Heissgetränkeautomaten ausgeführt, da der Sensor ein Reinigungsgefäss erkennen kann und die Steuereinheit, zu der diese Information übertragen wird, automatisch erkennt, dass ein Reinigungsbetriebsmodus gewünscht ist. Somit wird verhindert, dass dem Nutzer verschiedene Heissgetränke, z. B. Kaffeevariationen, auf der Anzeigeeinrichtung angezeigt werden wenn, ein Reinigungsgefäss auf der Trinkgefässablage unterhalb einer der Heissgetränkeauslässe platziert wird.

Denkbar ist auch, dass der Reinigungsbetriebsmodus des Heissgetränkeautomaten automatisch gestartet wird, wenn ein Reinigungsgefäss auf der Trinkgefässablage unterhalb einer der Heissgetränkeauslässe abgestellt wird, oder dem Nutzer lediglich auf der Anzeigeeinrichtung angezeigt wird, dass ein Reinigungsgefäss auf der Trinkgefässablage unterhalb einer der Heissgetränkeauslässe platziert wurde und der Nutzer auswählen kann, vorzugsweise auf der Anzeigeeinrichtung, ob ein Reinigungsbetriebsmodus des Heissgetränkeautomat durchgeführt werden soll.

Insgesamt wird verhindert, dass dem Nutzer unnötige Informationen angezeigt werden, insbesondere Heissgetränke, die zum Trinken geeignet sind, wenn ein Reinigungsgefäss auf der Trinkgefässablage platziert wird und im Gegenzug ermöglicht, einen Reinigungsbetriebsmodus des Heissgetränkeautomaten entweder manuell zu starten, wenn ein Reinigungsgefäss auf der Trinkgefässablage platziert wurde, wobei dies vereinfacht wird, da nur der Reinigungsbetriebsmodus auf der Anzeigeeinrichtung angezeigt wird und auswählbar ist, oder aber einen Reinigungsbetriebsmodus automatisch zu starten, sobald ein Reinigungsgefäss unterhalb einer der Heissgetränkeauslässe auf der Trinkgefässablage abgestellt wird.

Gemäss einem weiteren Aspekt der Erfindung ist vorgesehen, dass ein erster Sensor vorgesehen ist, der ausgebildet ist, zu detektieren, ob ein Trinkgefäss unterhalb des ersten Heissgetränkeauslasses abgestellt ist und/oder welche Art ein Trinkgefäss ist, welches unterhalb des ersten Heissgetränkeauslasses abgestellt ist, und dass ein zweiter Sensor vorgesehen ist, der ausgebildet ist, zu detektieren, ob ein Trinkgefäss unterhalb des zweiten Heissgetränkeauslasses abgestellt ist und/oder welche Art ein Trinkgefäss ist, welches unterhalb des zweiten Heissgetränkeautomaten abgestellt ist.

Vorteilhäfterweise kann hierdurch sowohl detektiert werden, ob unterhalb des ersten Heissgetränkeauslasses ein Trinkgefäss abgestellt ist, als auch detektiert werden, ob unterhalb des zweiten Heissgetränkeauslasses ein Trinkgefäss abgestellt ist. Dies gilt entsprechend dafür, welcher Art ein Trinkgefäss ist, welches unterhalb des ersten Heissgetränkeauslasses und/oder des zweiten Heissgetränkeauslasses abgestellt ist. Somit wird ermöglicht, dass Heissgetränke nur an den Heissgetränkeauslässen ausgegeben werden, unterhalb derer ein Trinkgefäss abgestellt ist. Ausserdem wird ermöglicht, dass dem Nutzer über die Anzeigeeinrichtung nur die Heissgetränke angezeigt werden, welche an den Heissgetränkeauslässen ausgebbar sind, unterhalb derer mindestens ein Trinkgefäss abgestellt ist.

Somit werden dem Nutzer die Heissgetränke angezeigt, die am ersten Heissgetränkeauslass ausgebbar sind, wenn unterhalb des ersten Heissgetränkeauslasses ein Trinkgefäss abgestellt ist. Entsprechendes gilt für den zweiten Heissgetränkeauslass. Wenn unterhalb des ersten sowie unterhalb des zweiten Heissgetränkeauslasses ein Trinkgefäss abgestellt wurde, insgesamt also zwei Trinkgefässe auf der Trinkgefässablage abgestellt wurden, zeigt die Anzeigeeinrichtung die Heissgetränke an, die am ersten Heissgetränkeauslass oder am zweiten Heissgetränkeauslass ausgebbar sind. Somit kann der Nutzer ein Heissgetränk auswählen, welches an dem ersten Heissgetränkeauslass oder an dem zweiten Heissgetränkeauslass ausgebildet wird. Da unter beiden Heissgetränkeauslässen ein Trinkgefäss abgestellt ist, wird verhindert, dass ein Heissgetränk an einem Heissgetränkeauslass ausgegeben wird, unterhalb dessen gar kein Trinkgefäss abgestellt ist.

Gemäss einem weiteren Aspekt der Erfindung ist vorgesehen, dass der mindestens eine Sensor in einer Ebene parallel zur Abstellebene der Trinkgefässablage angeordnet ist und ausgebildet ist, in der Ebene, in der der Sensor angeordnet ist, vorzugsweise durch Abstandsmessung zu detektieren, ob ein Trinkgefäss unterhalb des ersten Heissgetränkeauslasses abgestellt ist und/oder unterhalb des zweiten Heissgetränkeauslasses abgestellt ist und/oder welche Art ein Trinkgefäss ist, welches unterhalb des ersten Heissgetränkeauslasses oder unterhalb des zweiten Heissgetränkeauslasses abgestellt ist.

Vorteilhafterweise kann hierdurch erreicht werden, dass nur ein einzelner Sensor notwendig ist, um zu detektieren, ob ein Trinkgefäss unterhalb des ersten Heissgetränkeauslasses abgestellt oder unterhalb des zweiten Heissgetränkeauslasses abgestellt ist. Insbesondere wenn der Sensor als Abstandsmesssensor ausgebildet ist, kann eine derartige Detektierung vorgenommen werden, da der Abstand zwischen dem Sensor und dem ersten Heissgetränkeauslass ein anderer ist als der Abstand zwischen dem ersten Sensor und dem zweiten Heissgetränkeauslass.

Wenn also ein Trinkgefäss unterhalb des ersten Heissgetränkeauslasses platziert wird, wird vom Sensor der Abstand zwischen dem Sensor und dem Trinkgefäss, das unterhalb des ersten Heissgetränkeauslasses platziert ist, gemessen. Wenn ein Trinkgefäss unterhalb des zweiten Heissgetränkeauslasses platziert wird, wird der Abstand zwischen dem Sensor und dem Trinkgefäss, das unterhalb des zweiten Heissgetränkeauslasses platziert ist, gemessen. Da diese zwei Distanzen unterschiedlich sind, kann somit vom Sensor detektiert werden, ob ein Trinkgefäss unterhalb des ersten Heissgetränkeauslasses platziert ist oder unterhalb des zweiten Heissgetränkeauslasses platziert ist.

Gemäss einem weiteren Aspekt der Erfindung ist vorgesehen, dass der Heissgetränkeautomat mindestens einen weiteren Heissgetränkeauslass aufweist, wobei der Sensor ausgebildet ist, zu detektieren, ob ein Trinkgefäss unterhalb des ersten und/oder des zweiten und/oder des mindestens einen weiteren Heissgetränkeauslasses auf der Trinkgefässablage abgestellt ist und/oder welche Art ein Trinkgefäss ist, welches unterhalb des ersten und/oder des zweiten und/oder des mindestens einen weiteren Heissgetränkeauslasses auf der Trinkgefässablage abgestellt ist.

Vorteilhafterweise wird somit verhindert, dass ein Heissgetränk von einem Heissgetränkeauslass ausgegeben wird, unterhalb dessen gar kein Trinkgefäss abgestellt ist, und noch vorteilhafterweise ermöglicht, dass auf der Anzeigeeinrichtung dem Nutzer jeweils nur die Heissgetränke angezeigt werden, welche von den Heissgetränkeauslässen aüsgebbar sind, unterhalb dessen sich Trinkgefässe befinden. Denkbar ist, dass der Heissgetränkeautomat als Kaffeevollautomat ausgebildet ist und einen Cappuccinoauslass, einen Kaffeeauslass sowie einen Heisswasserauslass aufweist und die drei Positionen unterhalb dieser drei Auslässe von dem mindestens einen Sensor derart überwacht werden, dass der mindestens eine Sensor erfasst, wenn ein Trinkgefäss unterhalb einer der drei Auslässe platziert wird.

Denkbar ist auch, dass der Heissgetränkeautomat noch mehr Heissgetränkeauslässe aufweist, wobei der mindestens eine Sensor ausgebildet ist, vorzugsweise alle Positionen unterhalb der Heissgetränkeauslässe zu überwachen derart, dass vom mindestens einen Sensor detektiert wird, wenn ein Trinkgefäss, unterhalb einer der Heissgetränkeauslässe platziert wird.

Nachfolgend wird die Erfindung unter Bezugnahme auf die beiliegenden Zeichnungen anhand exemplarischer Ausführungsformen des erfindungsgemässen Heissgetränkeautomats näher beschrieben.

In den Zeichnungen zeigen:
- Fig. 1: eine schematische Frontansicht des erfindungsgemässen Heissgetränkeautomats;
- Fig. 2: eine schematische Frontansicht des erfindungsgemässen Heissgetränkeautomats mit Trinkgefäss unter einem ersten Heissgetränkeauslass;
- Fig. 3: eine schematische Frontansicht des erfindungsgemässen Heissgetränkeautomats mit Trinkgefäss unter einem zweiten Heissgetränkeauslass;
- Fig. 4: eine schematische Frontansicht einer weiteren Ausführungsform des erfindungsgemässen Heissgetränkeautomats mit Trinkgefässen unterhalb eines ersten Heissgetränkeauslasses;
- Fig. 5: eine schematische Frontansicht einer weiteren Ausführungsform des erfindungsgemässen Heissgetränkeautomats mit Trinkgefäss unterhalb eines zweiten Heissgetränkeauslasses; und
- Fig. 6: eine schematische Frontansicht einer weiteren Ausführungsform des erfindungsgemässen Heissgetränkeautomats mit einem Reinigungsgefäss unterhalb mehrerer Heissgetränkeauslässe.

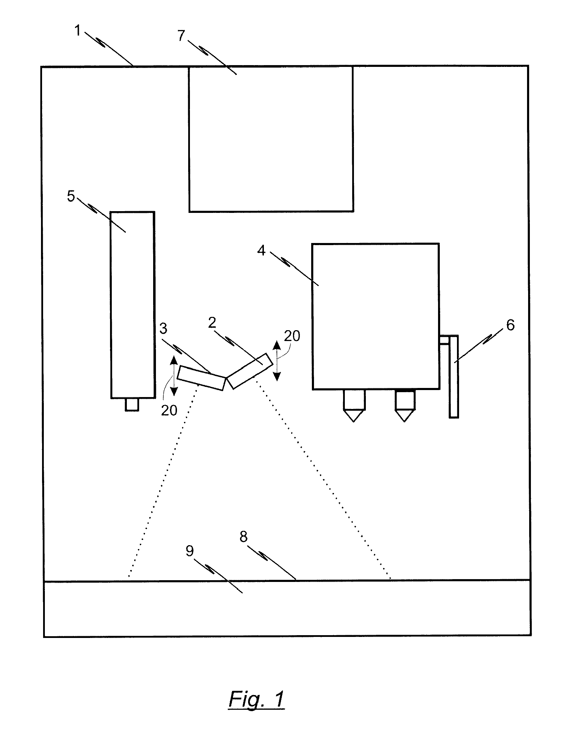

Fig. 1 zeigt einen Heissgetränkeautomaten 1 in einer schematischen Frontansicht, wobei der Heissgetränkeautomat 1 mehrere Heissgetränkeauslässe 4, 5, 6 bzw. einen ersten Heissgetränkeauslass 4, einen zweiten Heissgetränkeauslass 5 sowie einen weiteren Heissgetränkeauslass 6 aufweist.

Des Weiteren ist ein erster Sensor 2 sowie ein zweiter Sensor 3 vorgesehen, die vorzugsweise als optische Abstandsmesssensoren ausgebildet sind.

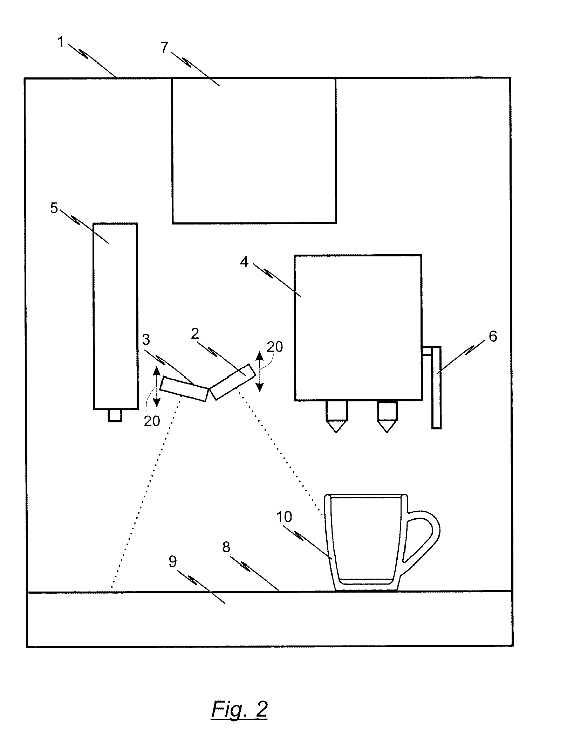

Wie in Fig. 2 zu sehen, kann ein Trinkgefäss 10, beispielsweise eine Tasse oder ein Glas aus Keramik oder Glasmaterial, auf einer Trinkgefässablage 8 abgestellt bzw. platziert werden.

Die Sensoren 2, 3 sind ausgebildet, zu detektieren, ob unterhalb einer der Heissgetränkeauslässe, insbesondere unterhalb des ersten Heissgetränkeauslasses 4 bzw. unterhalb des zweiten Heissgetränkeauslasses 5, ein Trinkgefäss 10 abgestellt wird.

In Fig. 2 ist schematisch ein Trinkgefäss 10 unterhalb des ersten Heissgetränkeauslasses 4 abgestellt und der erste Sensor 2 detektiert dies, vorzugsweise durch Aussenden eines elektromagnetischen Pulses und anschliessender Laufzeitmessung.

Der Heissgetränkeautomat 1 weist eine Steuereinrichtung auf, die nicht dargestellt ist, sowie eine Anzeigeeinrichtung 7, auf der einem Nutzer Heissgetränke angezeigt werden, die dieser auswählen kann. Die Auswahl erfolgt beispielsweise wieder über die Anzeigeeinrichtung 7, die hierzu ein berührungsempfindliches Display aufweist. Natürlich ist auch denkbar, dass zur Auswahl eines Heissgetränks ein anderer Mechanismus wie z. B. ein Wahlrad zum Einsatz kommt. Die Anzeigeeinrichtung 7 ist vorzugsweise als Display, bevorzugter als berührungsempfindliches Display ausgebildet.

Wenn nun ein Trinkgefäss 10 unter den ersten Heissgetränkeauslass 4 abgestellt wird, wird dies erfindungsgemäss vom ersten Sensor 2 detektiert. Diese Information wird zum ersten Sensor 2 über eine geeignete signaltechnische Verbindung an die Steuereinheit weitergegeben, welche daraufhin die Anzeigeeinrichtung 7 ansteuert derart, dass auf der Anzeigeeinrichtung 7 die Heissgetränke zur Auswahl dargestellt werden, welche vom ersten Heissgetränkeauslass 4 in das Trinkgefäss 10 ausgebbar sind.

Ein Nutzer kann somit auf der Anzeigeeinrichtung 7 nur die Heissgetränke sehen, die von dem ersten Heissgetränkeauslass 4 in das Trinkgefäss 10 ausgebbar sind. Der Nutzer wird somit nicht mit vielen Informationen überfrachtet, die in diesem Moment nicht hilfreich sind, da Heissgetränke angeboten werden, die gar nicht zum ersten Heissgetränkeauslass 4 ausgebbar sind. Ausserdem wird verhindert, dass der Nutzer Heissgetränke auswählt, die dann an einem Heissgetränkeauslass ausgegeben werden, unterhalb dessen sich gar kein Trinkgefäss 10 befindet.

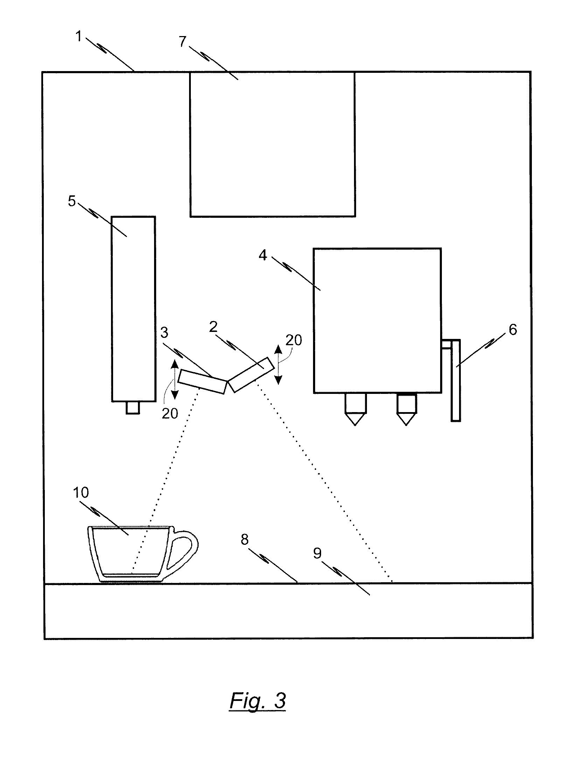

In Fig. 3 ist beispielhaft die Situation gezeigt, dass ein Trinkgefäss 10 unterhalb des zweiten Heissgetränkeauslasses 5 platziert ist. Dies wird vom zweiten Sensor 3 detektiert. Entsprechend und wie oben beschrieben wird diese Information vom zweiten Sensor 3 an die Steuereinheit weitergegeben, welche daraufhin die Anzeigeeinrichtung 7 so ansteuert, dass auf der Anzeigeeinrichtung 7 nur die Heissgetränke dargestellt werden, die am zweiten Heissgetränkeauslass 5 in das Trinkgefäss 10 ausgebbar sind.

Denkbar ist natürlich auch, dass sowohl unter dem ersten Heissgetränkeauslass 4 als auch unter dem zweiten Heissgetränkeauslass 5 ein Trinkgefäss 10 angeordnet ist. In diesem Fall wird auf der Anzeigeeinrichtung 7 die Information dargestellt, die den Heissgetränken entspricht, die von dem ersten Heissgetränkeauslass 4 oder von dem zweiten Heissgetränkeauslass 5 ausgebbar sind. Der Nutzer kann somit ein Heissgetränk auswählen, das dann von dem ersten Heissgetränkeauslass 4 in das unter dem ersten Heissgetränkeauslass 4 befindliche Trinkgefäss 10 ausgebeben wird oder von dem zweiten Heissgetränkeauslass 5 in das entsprechend darunter plätzierter Trinkgefäss 10 ausgegeben wird.

Ebenso ist denkbar, dass mindestens ein weiterer Heissgetränkeauslass 6 vorgesehen ist, wobei erfindungsgemäss vorzugsweise von dem mindestens einen Sensor 2, 3 detektiert wird, ob ein Trinkgefäss 10 unterhalb des weiteren Trinkgefässauslasses 6 platziert wurde. Entsprechend wird dann auf der Anzeigeeinrichtung 7 lediglich dargestellt, welche Heissgetränke von dem weiteren Heissgetränkeauslass 6 ausgebbar sind. Natürlich können auch wieder mehrere Trinkgefässe 10 unterhalb verschiedener Heissgetränkeauslässe 4, 5, 6 abgestellt werden und auf der Anzeigeeinrichtung 7 werden die Heissgetränke angezeigt, die von den entsprechenden Heissgetränkeauslässen 4, 5, 6 ausgegeben werden können.

Ausserdem wird verhindert, dass Heissgetränke an Heissgetränkeauslässen 4, 5, 6 ausgegeben werden, unter denen kein Trinkgefäss 10 angeordnet ist. Ob ein Trinkgefäss 10 unterhalb einer der Heissgetränkeauslässe 4, 5, 6 angeordnet ist, wird in diesem Fall jeweils von dem mindestens einen Sensor 2, 3 detektiert, wobei diese Information an die Steuereinheit übermittelt wird, und die Steuereinheit verhindert, dass ein Heissgetränk an einem Heissgetränkeauslass 4, 5, 6 ausgegeben wird, unterhalb dessen kein Trinkgefäss 10 abgestellt ist, insbesondere dadurch, dass kein Heissgetränk vom Nutzer auswählbar ist, welches nur an einem Heissgetränkeauslass ausgebbar ist, unter welchem kein Trinkgefäss abgestellt ist.

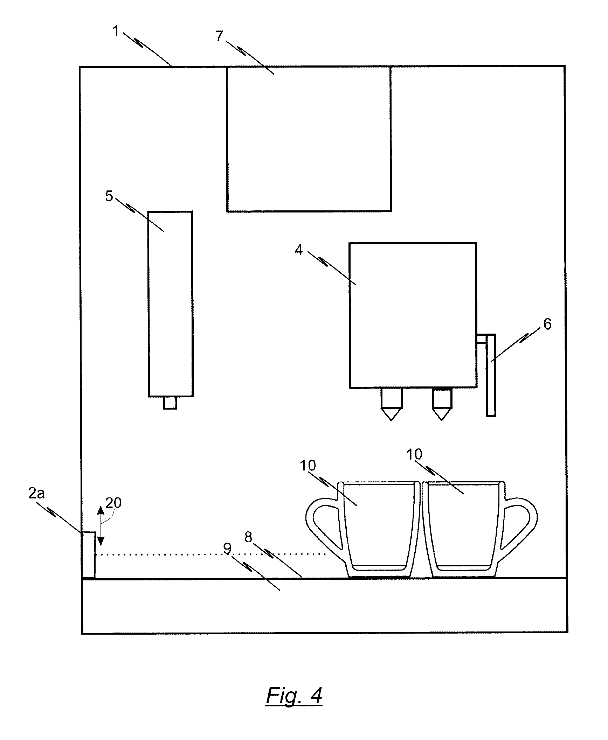

In Fig. 4 ist eine weitere Ausführungsform des erfindungsgemässen Heissgetränkeautomaten dargestellt, in welcher lediglich ein Sensor 2a vorgesehen ist. Der Sensor 2a ist derart angeordnet, dass die Detektionsebene des Sensors 2a parallel zu der Abstellebene der Trinkgefässe 10 auf der Trinkgefässablage 8 ausgebildet ist.

Der Sensor 2a ist hierbei vorzugsweise als Abstandssensor ausgebildet und ist ausgelegt, die Distanz zwischen dem Sensor 2a und einem Trinkgefäss 10 zu messen, welches unter einem der Heissgetränkeauslässe 4, 5, 6 abgestellt ist. Da die Distanzen zwischen dem Sensor 2a und dem jeweiligen Heissgetränkeauslässen 4, 5, 6 bzw. den Positionen unterhalb der Heissgetränkeauslässe 4, 5, 6, an denen Trinkgefässe 10 platziert werden können, variiert, kann somit von dem Sensor 2a detektiert werden, ob ein Trinkgefäss 10 unterhalb eines der Heissgetränkeauslässe 4, 5, 6 platziert ist und unter welchem der Heissgetränkeauslässe 4, 5, 6 ein entsprechendes Trinkgefäss 10 platziert ist.

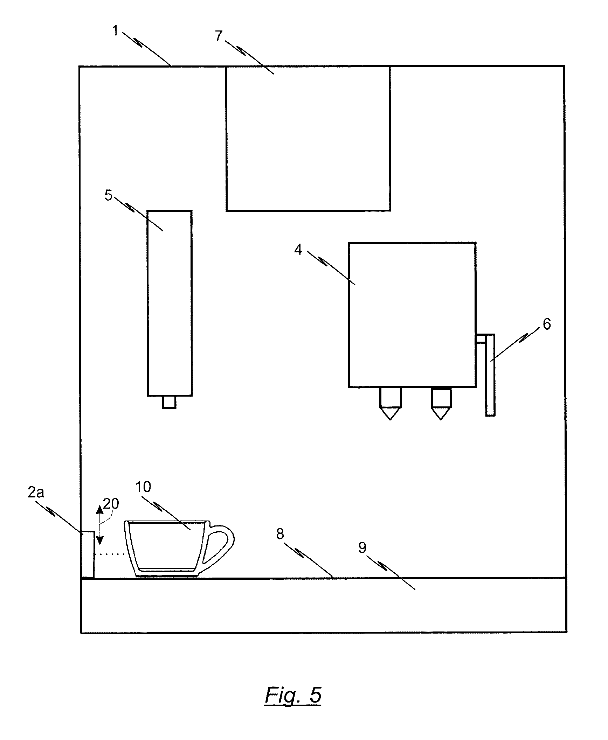

Exemplarisch zeigt Fig. 4 hierbei den Fall, dass ein Trinkgefäss 10 unterhalb des ersten Heissgetränkeauslasses 4 platziert wurde. Dies kann von dem Sensor 2a erfasst werden. Fig. 5 zeigt beispielhaft den Fall, bei dem ein Trinkgefäss 10 unterhalb des zweiten Heissgetränkeauslasses 5 platziert wurde. Auch dies kann vom Sensor 2a detektiert werden.

Wie bereits oben beschrieben kann diese entsprechende Information vom Sensor 2a an die (in Fig. 4 und 5 nicht dargestellte) Steuereinheit übermittelt werden, die wiederum die Anzeigeeinrichtung 7 ansteuert derart, dass nur die Heissgetränke auf der Anzeigeeinrichtung 7 angezeigt werden, die von den Heissgetränkeauslässen 4, 5, 6 ausgebbar sind, unter denen jeweils Trinkgefässe 10 abgestellt sind. Der mindestens eine Sensor 2a ist vorzugsweise darüber hinaus ausgebildet, die Art des Trinkgefässes 10 zu detektieren, die auf der Trinkgefässablage 8 unterhalb einer der Heissgetränkeauslässe 4, 5, 6 abgestellt wird. Diese Information wird vom Sensor 2a wiederum an die Steuereinheit übermittelt, die die Anzeigeeinrichtung 7 dann entsprechend so ansteuert, dass wiederum nur die Heissgetränke auf der Anzeigeeinrichtung 7 angezeigt werden, die in entsprechenden Trinkgefässe 10 durch die entsprechenden Heissgetränkeauslässe 4, 5, 6 ausgebbar sind.

Insbesondere kann die Art des Trinkgefässes bestimmen, welches Flüssigkeitsvolumen im Trinkgefäss 10 aufnehmbar ist. Dieses Volumen kann die Art des Heissgetränkes bestimmen, die von dem Trinkgefäss 10 aufnehmbar ist. Beispielsweise kann ein grosser Cappuccino nicht in einer kleinen Espressotasse aufgenommen werden.

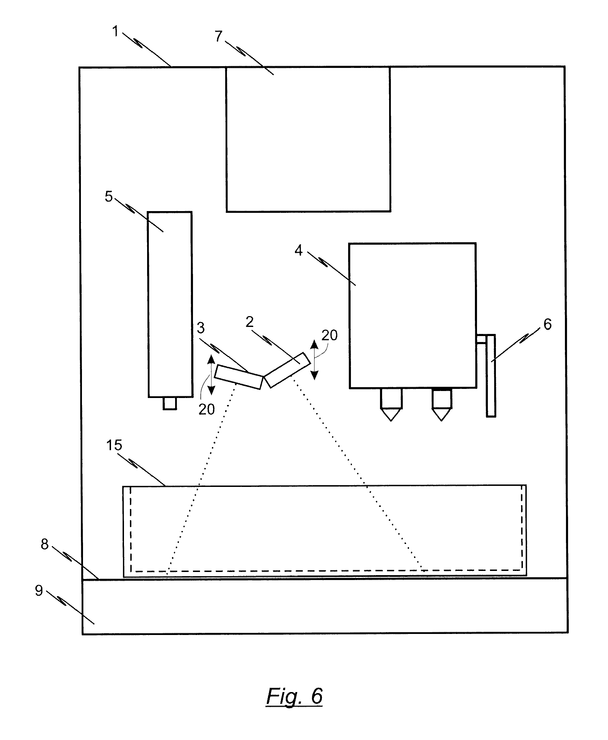

Schliesslich ist gemäss einer in Fig. 6 dargestellten Ausführungsform vorgesehen, dass ein Reinigungsgefäss 15 anstelle eines Trinkgefässes 10 unterhalb einer der Heissgetränkeauslässe 4, 5, 6 platziert wird und von dem mindestens einen Sensor 2, 3 detektiert wird, dass ein Reinigungsgefäss 15 unterhalb einer der Heissgetränkeauslässe 4, 5, 6 platziert wurde.

Hierauf folgend wird vorteilhafter Weise die Anzeigeeinrichtung 7 von der Steuereinheit angesteuert derart, dass dem Nutzer ein Reinigungsbetriebsmodus des Heissgetränkeautomaten 1 angezeigt wird, sodass der Benutzer entweder diesen Reinigungsbetriebsmodus auswählen kann oder aber der Reinigungsbetriebsmodus automatisch gestartet wird. Natürlich ist auch denkbar, dass der Reinigungsbetriebsmodus automatisch gestartet wird, ohne dass dies auf der Anzeigeeinrichtung 7 dargestellt wird und/oder ohne dass der Nutzer dies auswählen muss. Im Reinigungsmodus wird ein Reinigungsfluid (z.B. heisses Wasser, Dampf, ein Heisswasser/Dampf-Gemisch oder eine mit einem Reinigungs- oder Entkalkungsmittel versehene Flüssigkeit) durch zumindest einen der Heissgetränkeauslässe 4, 5, 6 in das unter den Heissgetränkeauslässen 4, 5, 6 angeordnete Reinigungsgefäss 15 geleitet und auf diese Weise zumindest einer der Heissgetränkeauslässe 4, 5, 6 mit dem Reinigungsfluid gespült und dabei gereinigt (sofern mittels der Sensoren 2, 3 verifiziert werden konnte, dass ein Reinigungsgefäss 15 unter dem mindestens einen der Heissgetränkeauslässe 4, 5, 6 angeordnet ist).

In den Fig. 1-6 ist jeweils durch einen Doppelpfeil angedeutet, dass der mindestens eine Sensor 2, 3 bzw. 2a derart angeordnet sein kann, dass seine Höhe relativ zur Trinkgefässablage 8 verstellbar ist. Auf diese Weise ist die Höhe des mindestens einen Sensors 2, 3 bzw. 2a veränderbar, beispielsweise in Abhängigkeit von der jeweiligen Höhe der Heissgetränkeauslässe 4, 5, 6 und/oder von der Höhe des jeweils verwendeten Trinkgefässes 10 und/oder von der Höhe des jeweils verwendeten Reinigungsgefässes 15. Dementsprechend ist die Höhe des mindestens einen Sensors 2, 3 bzw. 2a an die jeweilige Höhe der Heissgetränkeauslässe 4, 5, 6 und/oder die Höhe des jeweils verwendeten Trinkgefässes 10 und/oder die Höhe des jeweils verwendeten Reinigungsgefässes 15 anpassbar.

Die Erfindung ist nicht auf die in den Zeichnungen dargestellten Ausführungsformen des erfindungsgemässen Heissgetränkeautomats beschränkt, sondern ergibt sich aus einer Zusammenschau sämtlicher hierin offenbarter Merkmale.

## Patentansprüche

1. Heissgetränkeautomat (1), vorzugsweise Kaffeevollautomat, der folgendes aufweist:
• einen ersten Heissgetränkeauslass (4), vorzugsweise Kaffeeauslass;
• einen zweiten Heissgetränkeauslass (5), vorzugsweise Cappuccinoauslass;
• eine Trinkgefässablage (8), auf der Trinkgefässe (10), insbesondere Tassen oder Gläser, unterhalb der Heissgetränkeauslässe (4, 5) abstellbar sind derart, dass aus dem ersten und/oder zweiten Heissgetränkeauslass (4, 5) ein Heissgetränk in das Trinkgefäss (10) ausgebbar ist; und
• eine Sensoreinheit mit mindestens einem Sensor (2, 3, 2a),
wobei der Sensor (2, 3, 2a) ausgebildet ist, zu detektieren, ob ein Trinkgefäss (10) unterhalb zumindest einer der Heissgetränkeauslässe (4, 5) auf der Trinkgefässablage (8) abgestellt ist und/oder von welcher Art ein Trinkgefäss (10) ist, welches unterhalb zumindest einer der Heissgetränkeauslässe (4, 5) auf der Trinkgefässablage (8) abgestellt ist.

2. Heissgetränkeautomat (1) nach Anspruch 1,
wobei der Heissgetränkeautomat (1) ferner eine Steuereinheit sowie eine Anzeigeeinrichtung (7) aufweist, und wobei der mindestens eine Sensor (2, 3, 2a) mit der Steuereinheit signaltechnisch verbunden ist und wobei die Steuereinheit ausgebildet ist, die Anzeigeeinrichtung (7), wenn ein Trinkgefäss (10) unterhalb eines Heissgetränkeauslasses (4, 5) abgestellt ist und dies vom Sensor (2, 3, 2a) detektiert ist, anzusteuern derart, dass die Anzeigeeinrichtung (7) die Heissgetränke anzeigt, die von dem Heissgetränkeauslass (4, 5) ausgebbar sind, unterhalb dessen das Trinkgefäss (10) abgestellt ist und/oder die Heissgetränke anzeigt, die geeignet sind für das Trinkgefäss (10).

3. Heissgetränkeautomat (1) nach Anspruch 1 oder 2,
wobei der mindestens eine Sensor (2, 3, 2a) als Ultraschall-, Laserentfernungsmess-, PMD-, LIDAR-, induktiver oder kapazitativer Sensor ausgebildet ist.

4. Heissgetränkeautomat (1) einem der Ansprüche 2 bis 3,
wobei die Steuereinheit die detektierten Trinkgefässe (10) Trinkgefässgruppen zuordnet, wobei die Trinkgefässe (10) verschiedener Trinkgefässgruppen jeweils geeignet und/oder vorgesehen sind für verschiedene Arten von Heissgetränken.

5. Heissgetränkeautomat (1) nach einem der Ansprüche 1 bis 4,
wobei der mindestens eine Sensor (2, 3, 2a) die Art des Trinkgefässes (10) durch Detektion der Grösse, durch Detektion der Formgebung, durch Detektion eines auf dem Trinkgefäss (10) angebrachten Identifikationscodes und/oder durch Detektion des Materials des Trinkgefässes (10) erfasst.

6. Heissgetränkeautomat (1) nach einem der Ansprüche 1 bis 5,
wobei der mindestens eine Sensor (2, 3, 2a) ausgebildet ist, zu detektieren, ob das Trinkgefäss (10) als Reinigungsgefäss (15) ausgebildet ist.

7. Heissgetränkeautomat (1) nach Anspruch 2 und 6,
wobei die Steuereinheit ausgebildet ist, einen Reinigungsbetriebsmodus des Heissgetränkeautomat (1) zu starten, wenn von dem mindestens einen Sensor (2, 3, 2a) detektiert wird, dass ein Reinigungsgefäss (15) auf der Trinkgefässablage (8) unterhalb einer der Heissgetränkeauslässe (4, 5) abgestellt ist.

8. Heissgetränkeautomat (1) nach einem der Ansprüche 1 bis 7,
wobei ein erster Sensor (2) vorgesehen ist, der ausgebildet ist, zu detektieren, ob ein Trinkgefäss (10) unterhalb des ersten Heissgetränkeauslasses (4) abgestellt ist und/oder welcher Art ein Trinkgefäss (10) ist, welches unterhalb des ersten Heissgetränkeauslasses (4) abgestellt ist und ein zweiter Sensor (3) vorgesehen ist, der ausgebildet ist, zu detektieren, ob ein Trinkgefäss (10) unterhalb des zweiten Heissgetränkeauslasses (5) abgestellt ist und/oder welcher Art ein Trinkgefäss (10) ist, welches unterhalb des zweiten Heissgetränkeauslasses (5) abgestellt ist.

9. Heissgetränkeautomat (1) nach einem der Ansprüche 1 bis 7,
wobei der mindestens eine Sensor (2, 3, 2a) in einer Ebene parallel zur Abstellebene der Trinkgefässablage (8) angeordnet ist und ausgebildet ist, in der Ebene, in der der Sensor (2, 3, 2a) angeordnet ist, vorzugsweise durch Abstandsmessung zu detektieren, ob ein Trinkgefäss (10) unterhalb des ersten Heissgetränkeauslasses (4) abgestellt ist oder unterhalb des zweiten Heissgetränkeauslasses (5) abgestellt ist und/oder welcher Art ein Trinkgefäss (10) ist, welches unterhalb des ersten Heissgetränkeauslasses (4) oder unterhalb des zweiten Heissgetränkeauslasses (5) abgestellt ist.

10. Heissgetränkeautomat (1) nach einem der Ansprüche 1 bis 9,
wobei der Heissgetränkeautomat (1) mindestens einen weiteren Heissgetränkeauslass (6) aufweist, und wobei der Sensor (2, 3, 2a) ausgebildet ist, zu detektieren, ob ein Trinkgefäss (10) unterhalb des ersten und/oder des zweiten Heissgetränkeauslasses (4, 5) und/oder des mindestens einen weiteren Heissgetränkeauslass (6) auf der Trinkgefässablage (8) abgestellt ist und/oder welcher Art ein Trinkgefäss (10) ist, welches unterhalb des ersten und/oder des zweiten Heissgetränkeauslasses (4, 5) und/oder des mindestens einen weiteren Heissgetränkeauslass (6) auf der Trinkgefässablage (8) abgestellt ist.

11. Heissgetränkeautomat (1) nach einem der Ansprüche 1 bis 10,
wobei der mindestens eine Sensor (2, 3, 2a) derart angeordnet ist, dass seine Höhe relativ zur Trinkgefässablage (8) verstellbar ist.

12. Verfahren zum Betreiben eines Heissgetränkeautomaten (1) nach einem der Ansprüche 1 bis 11,
wobei folgender Verfahrensschritt vorgesehen ist:
• Detektieren durch den mindestens einen Sensor (2, 3, 2a), ob mindestens ein Trinkgefäss (10) auf der Trinkgefässablage (8) unterhalb zumindest einer der Heissgetränkeauslässe (4, 5) abgestellt wird und/oder welcher Art ein Trinkgefäss (10) ist, welches unterhalb zumindest einer der Heissgetränkeauslässe (4, 5) abgestellt wird.

13. Verfahren nach Anspruch 12,
wobei ferner folgender Verfahrensschritt vorgesehen ist:
• Ansteuern der Anzeigeeinrichtung (7) durch eine Steuereinrichtung in dem Fall, dass ein Trinkgefäss (10) unterhalb einer der Heissgetränkeauslässe (4, 5) auf der Trinkgefässablage (8) abgestellt wird, derart, dass die Anzeigeeinrichtung (7) einem Nutzer die Heissgetränke anzeigt, die von dem Heissgetränkeauslass (4, 5) ausgebbar sind, unterhalb dessen das Trinkgefäss (10) abgestellt ist und/oder die Heissgetränke anzeigt, die für das Trinkgefäss (10) geeignet sind.

14. Verfahren nach Anspruch 12,
wobei eine Steuereinheit einen Reinigungsbetriebsmodus des Heissgetränkeautomat (1) startet, wenn von dem mindestens einen Sensor (2, 3, 2a) detektiert wird, dass ein Reinigungsgefäss (15) auf der Trinkgefässablage (8) unterhalb einer der Heissgetränkeauslässe (4, 5) abgestellt wurde.
